# EUROPEAN PATENT APPLICATION

(11) **EP 4 414 829 A1**
(43) Date of publication of application: **14.08.2024**
(21) Application number: 21964479.6
(22) Date of filing: 22.11.2021
(51) Int. Cl.: G06F 8/65

(54) **APPLICATION DISPLAY METHOD AND ELECTRONIC DEVICE**

(71) Applicant: Huawei Technologies Co., Ltd., Shenzhen, Guangdong 518129 (CN)
(72) Inventor: RONG, Yinhua, Shenzhen, Guangdong 518129 (CN)
(74) Representative: MERH-IP Matias Erny Reichl Hoffmann Patentanwälte PartG mbB
(86) International application number: PCT/CN2021/132196
(87) International publication number: WO 2023/087330

(57) **Abstract**

Embodiments of this application provide an application display method. The method includes: displaying a first interface of a first application; and detecting a first operation in the first interface, where the first operation is used to display a second interface of the first application, the second interface includes a first sub-interface and a second sub-interface, the first sub-interface is used to display a running status of a target vehicle on an electronic map, and the second sub-interface is used to provide an upgrade function. In embodiments of this application, the running status of the target vehicle on the electronic map is displayed in the first sub-interface, and the upgrade function is provided in the second sub-interface. When the target vehicle is checked before upgrade, the running status of the target vehicle on the electronic map is obtained, to determine whether to upgrade the target vehicle. This can prevent a vehicle owner from performing remote misoperations, and improve interaction experience in an upgrade process.

## Description

### TECHNICAL FIELD

Embodiments of this application relate to the field of intelligent connected vehicles, and in particular, to an application display method and an electronic device.

### BACKGROUND

With development of intelligent connected vehicles, people have increasingly high requirements on computing and control capabilities of vehicles. More functions are provided for users in a form of software. Therefore, software-defined vehicles are becoming an important vehicle development trend. When software in a vehicle needs to be installed or updated, the over the air (over the air, OTA) technology may be used to connect to a cloud to install or update the software in the vehicle.

When OTA software upgrade is remotely operated on an app of a mobile phone, a vehicle status needs to be requested to be checked for upgrade. To-be-checked content includes key statuses of the vehicle such as a vehicle speed, P-gear, a ready state, and a battery level. Upgrade is performed only when the key statuses of the vehicle meet a condition.

Therefore, in a remote upgrade process, how to prevent a vehicle owner from performing remote misoperations and how to improve interaction experience in the upgrade process are urgent technical problems that need to be resolved.

### SUMMARY

Embodiments of this application provide an application display method and an electronic device, to help prevent a vehicle owner from performing remote misoperations in a remote upgrade process of a vehicle, and improve interaction experience in the upgrade process.

According to a first aspect, an embodiment of this application provides an application display method. The method may be applied to an electronic device (for example, a smartphone), an entire vehicle, a vehicle-mounted device in a vehicle, or a chip or another component in a vehicle.

The method includes: displaying a first interface of a first application; and detecting a first operation in the first interface, where the first operation is used to display a second interface of the first application, the second interface includes a first sub-interface and a second sub-interface, the first sub-interface is used to display a running status of a target vehicle on an electronic map, and the second sub-interface is used to provide an upgrade function.

In this embodiment of this application, the running status of the target vehicle on the electronic map is displayed in the first sub-interface, and the upgrade function is provided in the second sub-interface. When the target vehicle is checked before upgrade, the running status of the target vehicle on the electronic map is checked, to determine whether to remotely upgrade the target vehicle. This can prevent a vehicle owner from performing remote misoperations, and improve interaction experience in an upgrade process.

With reference to the first aspect, in a possible implementation, the running status of the target vehicle on the electronic map includes location information of the target vehicle.

With reference to the first aspect, in a possible implementation, the location information of the target vehicle includes real-time location information or dynamic location information of the target vehicle.

The location information of the target vehicle is displayed on the electronic map, so that the vehicle owner can view the real-time location information of the vehicle on an app of a mobile phone, to determine whether to upgrade the vehicle. This can prevent the vehicle owner for performing remote misoperations, and improve interaction experience in the upgrade process.

With reference to the first aspect, in a possible implementation, the first sub-interface is further used to display or prompt an upgrade area, and the upgrade area is used to define an area in which the upgrade function can be performed.

The upgrade area is prompted or displayed in the first sub-interface, so that the vehicle owner determines whether the target vehicle is in an area in which upgrade can be performed, to determine whether to upgrade the vehicle. This ensures driving safety of the target vehicle.

With reference to the first aspect, in a possible implementation, the upgrade area is predefined or preconfigured.

In this embodiment of this application, the upgrade area may be predefined or preconfigured. The predefined or preconfigured upgrade area can effectively ensure that the vehicle is to be upgraded in a safe area. When the app of the mobile phone of the vehicle owner receives an upgrade notification, it is determined whether the vehicle is in the predefined or preconfigured safe area in which upgrade can be performed. If the vehicle is in the predefined or preconfigured safe area in which upgrade can be performed, the target vehicle is upgraded. This can ensure driving safety of the target vehicle. It may be understood that, in a process of using the vehicle by the vehicle owner, the upgrade area may alternatively be temporarily defined based on a requirement of the vehicle owner. This greatly improves flexibility of setting the upgrade area.

With reference to the first aspect, in a possible implementation, the method further includes: detecting a second operation, where the second operation is used to select the upgrade area on the electronic map; or detecting a second operation, where the second operation is used to enter location information of the upgrade area.

With reference to the first aspect, in a possible implementation, the method further includes: displaying feedback information, where the feedback information indicates that the target vehicle cannot be upgraded or the target vehicle does not meet an upgrade requirement.

With reference to the first aspect, in a possible implementation, the second sub-interface is used to provide an OTA upgrade function for the target vehicle.

According to a second aspect, an embodiment of this application provides an electronic device. The electronic device may be a smartphone, an entire vehicle, a vehicle-mounted device in a vehicle, or a chip or another component in a vehicle.

The electronic device includes a display apparatus, a memory, one or more processors, a first application, and one or more programs. The one or more programs are stored in the memory. When the one or more processors execute the one or more programs, the electronic device is enabled to perform the following method:
displaying a first interface of the first application; and
detecting a first operation in the first interface, where the first operation is used to display a second interface of the first application, the second interface includes a first sub-interface and a second sub-interface, the first sub-interface is used to display a running status of a target vehicle on an electronic map, and the second sub-interface is used to provide an upgrade function.

With reference to the second aspect, in a possible implementation, the running status of the target vehicle on the electronic map includes location information of the target vehicle.

With reference to the second aspect, in a possible implementation, the location information of the target vehicle includes real-time location information or dynamic location information of the target vehicle.

With reference to the second aspect, in a possible implementation, the first sub-interface is further used to display or prompt an upgrade area, and the upgrade area is used to define an area in which the upgrade function can be performed.

With reference to the second aspect, in a possible implementation, the upgrade area is predefined or preconfigured.

With reference to the second aspect, in a possible implementation, the electronic device further performs: detecting a second operation, where the second operation is used to select the upgrade area on the electronic map; or detecting a second operation, where the second operation is used to enter location information of the upgrade area.

With reference to the second aspect, in a possible implementation, the electronic device further performs: displaying feedback information, where the feedback information indicates that the target vehicle cannot be upgraded or the target vehicle does not meet an upgrade requirement.

According to a third aspect, an embodiment of this application provides an upgrade method. The method may be applied to an electronic device (for example, a mobile phone), an entire vehicle, a vehicle-mounted device in a vehicle, or a chip or another component in a vehicle.

The method includes: receiving an upgrade instruction; and when a target vehicle is in an upgrade state, performing an upgrade operation according to the upgrade instruction; or when the target vehicle is not in an upgrade state, sending feedback information, where the feedback information indicates that the target vehicle cannot be upgraded or the target vehicle does not meet an upgrade requirement. The upgrade state includes that the target vehicle is in a guarded state.

In this embodiment of this application, when the target vehicle is in the upgrade state, the target vehicle performs the upgrade operation according to the upgrade instruction; or when the target vehicle is not in the upgrade state, the target vehicle sends the feedback information indicating that the target vehicle cannot be upgraded or does not meet the upgrade requirement. The upgrade state includes that the target vehicle is in the guarded state. In other words, before remote upgrade, the guarded state of the target vehicle is checked, and is fed back to an app of the mobile phone in a timely manner, to lock the vehicle from the outside for defense. This ensures upgrade security of the vehicle.

With reference to the third aspect, in a possible implementation, the upgrade state further includes at least one of the following: A charging plug of the target vehicle is in a disconnected state, an on-board diagnostics OBD system of the target vehicle is in a disconnected state, the target vehicle is in P-gear, a filler cap of the target vehicle is in a closed state, a caliper of a hand brake of the target vehicle is in a clamped state, a battery level of the target vehicle is in a flashable state, or the target vehicle is in a non-ignition state.

With reference to the third aspect, in a possible implementation, the receiving an upgrade instruction includes: receiving, by the target vehicle in an upgrade area, the upgrade instruction. When the target vehicle is in the upgrade area, the target vehicle receives the upgrade instruction. This effectively improves interaction experience in a remote upgrade process. In this embodiment, the target vehicle outside the upgrade area cannot receive the upgrade instruction.

With reference to the third aspect, in a possible implementation, the upgrade instruction includes preset time information for software upgrade, and the preset time information indicates a preset time for software upgrade.

With reference to the third aspect, in a possible implementation, a target time is compared with the preset time, and software upgrade is performed when the preset time is greater than the target time.

The preset time for software upgrade is obtained, the preset time is compared with a time required by a user to complete a task, and software upgrade is performed when the preset time is greater than the target time. According to this embodiment, remote upgrade can be completed while the user completes the task. This greatly improves upgrade efficiency.

With reference to the third aspect, in a possible implementation, the upgrade instruction further includes preset battery level information required for upgrade, and the preset battery level information indicates a first battery level.

With reference to the third aspect, in a possible implementation, target battery level information of the target vehicle is obtained, where the target battery level information indicates a second battery level; and software upgrade is performed when a sum of the first battery level and the second battery level is greater than or equal to a remaining battery level of the target vehicle.

The required first battery level is obtained, the second battery level required by the target vehicle to complete the task is obtained, and software upgrade is performed when the sum of the first battery level and the second battery level is greater than or equal to the remaining battery level of the target vehicle.

With reference to the third aspect, in a possible implementation, both a primary account and a sub-account of the app of the mobile phone that are associated with the target vehicle receive the upgrade instruction.

According to a fourth aspect, an embodiment of this application provides an upgrade apparatus. The apparatus includes: a transceiver unit, configured to receive an upgrade instruction; and a processing unit, configured to: when a target vehicle is in an upgrade state, perform an upgrade operation according to the upgrade instruction; or when the target vehicle is not in an upgrade state, send feedback information, where the feedback information indicates that the target vehicle cannot be upgraded or the target vehicle does not meet an upgrade requirement. The upgrade state includes that the target vehicle is in a guarded state.

With reference to the fourth aspect, in a possible implementation, the upgrade state further includes at least one of the following: A charging plug of the target vehicle is in a disconnected state, an on-board diagnostics OBD system of the target vehicle is in a disconnected state, the target vehicle is in P-gear, a filler cap of the target vehicle is in a closed state, a caliper of a hand brake of the target vehicle is in a clamped state, a battery level of the target vehicle is in a flashable state, and the target vehicle is in a non-ignition state.

With reference to the fourth aspect, in a possible implementation, the transceiver unit is configured to receive, by the target vehicle in an upgrade area, the upgrade instruction.

With reference to the fourth aspect, in a possible implementation, the upgrade instruction includes preset time information for software upgrade, and the preset time information indicates a preset time for software upgrade.

With reference to the fourth aspect, in a possible implementation, the processing unit is further configured to: compare a target time with the preset time; and perform software upgrade when the preset time is greater than the target time.

With reference to the fourth aspect, in a possible implementation, the upgrade instruction further includes preset battery level information required for upgrade, and the preset battery level information indicates a first battery level.

With reference to the fourth aspect, in a possible implementation, the processing unit is further configured to: obtain target battery level information of the target vehicle, where the target battery level information indicates a second battery level; and perform software upgrade when a sum of the first battery level and the second battery level is greater than or equal to a remaining battery level of the target vehicle.

With reference to the fourth aspect, in a possible implementation, both a primary account and a sub-account of an app of a mobile phone that are associated with the target vehicle receive the upgrade instruction.

According to a fifth aspect, an embodiment of this application provides an apparatus. The apparatus includes a processor and a memory.

The memory is configured to store a program.

The processor is configured to execute the program stored in the memory, so that the apparatus implements the method according to any one of the first aspect, the third aspect, or the possible implementations of the first aspect or the third aspect.

According to a sixth aspect, an embodiment of this application provides a vehicle. The vehicle includes the electronic device according to the second aspect or the apparatus according to the fourth aspect.

According to a seventh aspect, an embodiment of this application provides a computer program product. The computer program product includes computer program code. When the computer program code is run on a computer, the computer is enabled to perform the method according to the first aspect; or when the computer program code is run on a computer, the computer is enabled to perform the method according to the third aspect.

It should be noted that all or a part of the computer program code may be stored in a storage medium. The storage medium may be packaged together with a processor, or may be packaged independently from a processor. This is not specifically limited in embodiments of this application.

According to an eighth aspect, an embodiment of this application provides a computer-readable medium. The computer-readable medium stores program code. When the computer program code is run on a computer, the computer is enabled to perform the method according to the first aspect or the third aspect.

According to a ninth aspect, an embodiment of this application provides a chip system. The chip system includes a processor, configured to invoke a computer program or computer instructions stored in a memory, so that the processor performs the method according to the first aspect and the possible designs of the first aspect, or performs the method according to the third aspect and the possible designs of the third aspect.

With reference to the ninth aspect, in a possible implementation, the processor is coupled to the memory through an interface.

With reference to the ninth aspect, in a possible implementation, the chip system further includes the memory, and the memory stores a computer program or computer instructions.

According to a tenth aspect, an embodiment of this application provides a processor. The processor is configured to invoke a computer program or computer instructions stored in a memory, so that the processor performs the method according to the first aspect and the possible designs of the first aspect, or performs the method according to the third aspect and the possible designs of the third aspect.

### BRIEF DESCRIPTION OF DRAWINGS

FIG. 1 is a schematic diagram of a vehicle communication system according to an embodiment of this application;
FIG. 2 is a schematic diagram of an application scenario in which upgrade is performed based on an OTA technology according to an embodiment of this application;
FIG. 3 is a flowchart of an application display method according to an embodiment of this application;
FIG. 4 is a schematic diagram of an application display method according to an embodiment of this application;
FIG. 5 is a schematic diagram of another application display method according to an embodiment of this application;
FIG. 6 is a schematic diagram of another application display method according to an embodiment of this application;
FIG. 7A and FIG. 7B are a schematic diagram of another application display method according to an embodiment of this application;
FIG. 8A and FIG. 8B are a schematic diagram of another application display method according to an embodiment of this application;
FIG. 9 is a schematic diagram of another application display method according to an embodiment of this application;
FIG. 10A and FIG. 10B are a schematic diagram of another application display method according to an embodiment of this application;
FIG. 11 is a schematic diagram of another application display method according to an embodiment of this application;
FIG. 12A and FIG. 12B are a schematic diagram of another application display method according to an embodiment of this application;
FIG. 13 is a schematic diagram of another application display method according to an embodiment of this application;
FIG. 14 is a schematic interaction flowchart of an upgrade method according to an embodiment of this application;
FIG. 15 is a schematic flowchart of an upgrade method according to an embodiment of this application;
FIG. 16 is a schematic block diagram of an electronic device according to an embodiment of this application;
FIG. 17 is a schematic block diagram of an apparatus according to an embodiment of this application; and
FIG. 18 is another schematic block diagram of an apparatus according to an embodiment of this application.

### DESCRIPTION OF EMBODIMENTS

The following describes technical solutions in embodiments of this application with reference to the accompanying drawings.

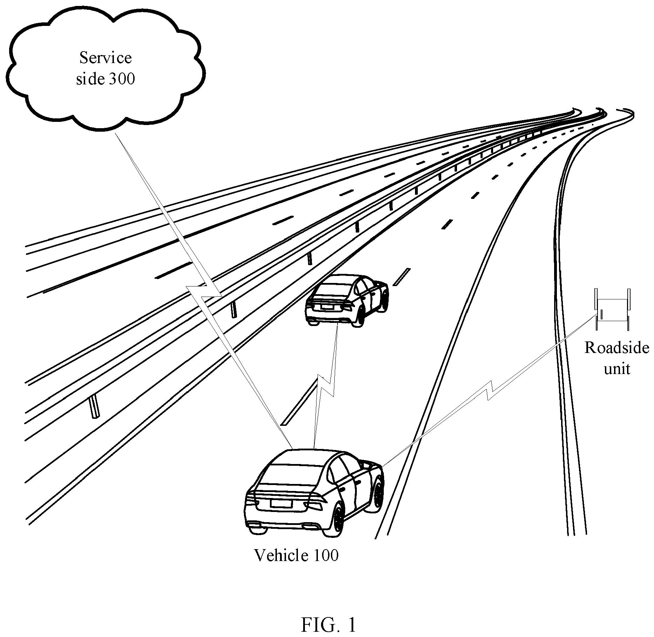

FIG. 1 is a schematic diagram of a communication system. The communication system includes a vehicle and a service side. As shown in FIG. 1, the service side may be a cloud, and the cloud may include a cloud server and/or a cloud virtual machine. The service side may communicate with the vehicle, to provide a plurality of services for the vehicle, for example, an over the air (over the air, OTA) technology service, a high-definition map service, and an autonomous driving or assisted driving service.

For example, in the OTA service, a software manager may upload software to the cloud, and the vehicle may automatically download the software from the cloud or a user selects to download the software from the cloud, to update local software, so as to implement function upgrade or function update of a local vehicle system. For example, an infotainment (infotainment) system of the vehicle may be upgraded by using OTA. For another example, an electronic control unit (electronic control unit, ECU) of the vehicle may be upgraded by using OTA, so that vehicle performance can be upgraded by upgrading the ECU. For another example, a vehicle suspension system may be upgraded and adjusted by using OTA, to provide more comfortable driving or ride experience for the user.

The vehicle may download high-definition map data from the cloud, to obtain a high-definition map, so as to provide a more accurate navigation service for the user. Road information is frequently updated. This service cannot only update road information to the map in a timely manner, but also reduce a local storage space requirement of the vehicle. For example, for a large city or region, an entire high-definition map includes a large amount of data. By using the high-definition map service provided by the cloud, the vehicle may obtain a high-definition map of a small area in a current location in real time when the vehicle is driving, and the high-definition map of the area may be released from the vehicle when not required. An app of a mobile phone of a vehicle owner may obtain map information from the cloud, so that the vehicle owner can obtain location information of the vehicle in real time.

The vehicle may interact with the cloud, to improve an autonomous driving or assisted driving function, so as to improve safety and travel efficiency of the vehicle. For example, the vehicle may collect road information and surrounding vehicle information by using a sensing apparatus installed on the vehicle, and upload the collected information to the cloud. The cloud trains a driving algorithm in different scenarios based on the collected information, continuously optimizes the driving algorithm as training data is updated, and updates an optimized driving algorithm to the vehicle, so that an autonomous driving capability of the vehicle for adapting to various scenarios is continuously improved. For another example, for a neural network-based image processing algorithm used by the sensing apparatus, training of the image processing algorithm may be completed on the cloud, and the image processing algorithm is updated with update of training data. Correspondingly, the vehicle may obtain an updated image processing algorithm from the cloud, so that an image processing capability of the sensing apparatus can be improved. For another example, in bad weather, the vehicle may obtain weather information and road traffic accident information by using the cloud, to assist the vehicle in planning. This improves travel efficiency, and reduces an accident risk of the vehicle. Alternatively, the cloud may send real-time road information, for example, traffic light information, to the vehicle. In this way, the vehicle may receive a traffic light change interval at a front intersection in advance, and calculate, based on a current vehicle speed, a passing time to be used by the vehicle, to determine an appreciate and safe passing occasion and plan a driving speed of the vehicle. Therefore, not only vehicle energy consumption can be reduced, but also driving safety can be improved.

The vehicle may exchange information with the cloud in a wireless communication mode. The wireless communication may comply with a wireless protocol of a network accessed by the vehicle, for example, V2X (C-V2X) communication of a cellular network. The cellular network is, for example, a long term evolution (long term evolution, LTE) wireless network or a 5th generation (5th generation, 5G) wireless network.

The communication system may further include a roadside unit (roadside unit, RSU). The roadside unit may be installed on a roadside, and may communicate with the cloud and the vehicle. The roadside unit communicating with the cloud may be considered as a terminal apparatus similar to the vehicle. The roadside unit communicating with the vehicle may be considered as a terminal apparatus similar to the vehicle, or may be considered as a service side apparatus of the vehicle. The roadside unit may interact with the vehicle or the cloud in a wireless communication mode. The roadside unit may communicate with the vehicle by using a dedicated short range communication (dedicated short range communication, DSRC) technology, or may communicate with the vehicle through cellular network-based V2X (C-V2X) communication, for example, based on a long term evolution LTE communication protocol or based on a 5G communication protocol. The roadside unit may communicate with the cloud through cellular network-based V2X (C-V2X) communication, for example, based on an LTE communication protocol or based on a 5G communication protocol. The roadside unit may provide a service for the vehicle, for example, implement vehicle identity identification, electronic toll collection, and electronic point deduction. A sensing apparatus may be installed in the roadside unit, to collect road information, so as to provide a vehicle-road collaboration service. The roadside unit may be connected to a roadside traffic sign (for example, an electronic traffic light or an electronic speed limit sign), to implement real-time control on the traffic light or the speed limit sign; or may provide road information to the vehicle by using the cloud or may directly provide road information to the vehicle, to improve the autonomous driving or assisted driving function.

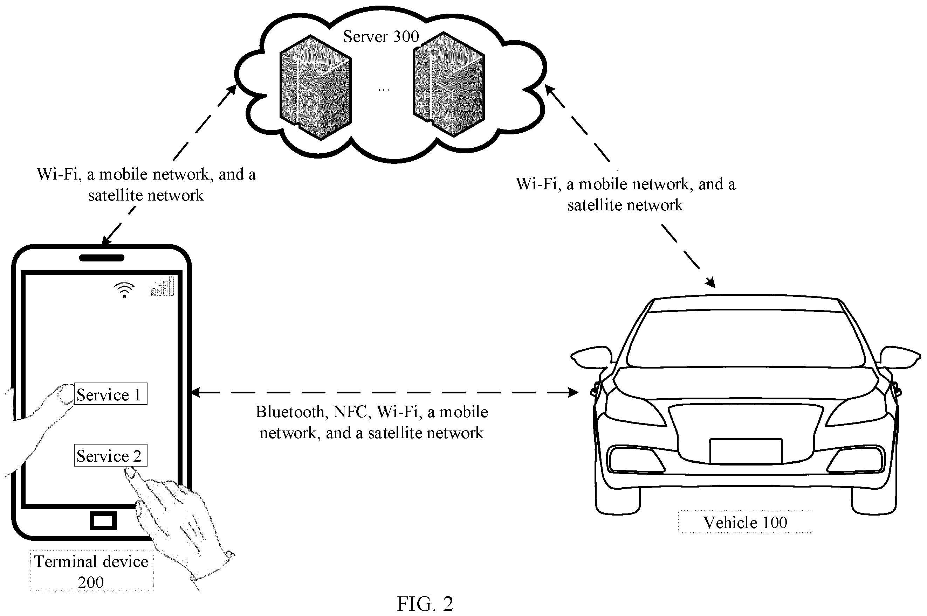

FIG. 2 is a schematic diagram of an application scenario in which upgrade is performed based on an OTA technology according to an embodiment of this application. The application scenario includes a terminal device (in FIG. 2, that a terminal device 200 is a smartphone is used as an example), a vehicle 100, and a server 300. The terminal device may communicate with the vehicle by using Bluetooth, NFC, Wi-Fi, a mobile network, and the like. The server may communicate with the terminal device or the vehicle by using Wi-Fi, a mobile network, and the like. The vehicle 100 includes a vehicle-end vehicle status module and a vehicle-end entire-vehicle upgrade control module, and the server 300 includes an OTA cloud vehicle status management module and an OTA cloud task management module.

In this embodiment of this application, a vehicle owner controls remote upgrade of a target vehicle by using an electronic device, an account corresponding to the vehicle owner is a primary account, a user is an entity that is driving the target vehicle, and an account corresponding to the user is a sub-account. When there is an upgrade task, both the vehicle owner and the user receive upgrade notification information. When the vehicle owner performs remote upgrade, a current running status of the target vehicle needs to be determined, to prevent the vehicle owner from performing remote misoperations and improve interaction experience in a remote upgrade process of the vehicle. The foregoing describes merely an example of the application scenario. This is not limited in embodiments of this application.

In embodiments of this application, the electronic device may be a mobile phone, a pad, an in-vehicle infotainment display, or the like. The electronic device may carry a software application (application, APP). The vehicle owner or the user performs an entering operation on the software app, to complete the upgrade task. The upgrade task includes an OTA upgrade task, and the OTA upgrade task includes a software upgrade task and a firmware upgrade task. This is not limited in embodiments of this application.

It should be noted that, in embodiments of this application, "at least one" means one or more, and "a plurality of means two or more. "And/or" describes an association relationship between associated objects, and represents that three relationships may exist. For example, A and/or B may represent the following cases: Only A exists, both A and B exist, and only B exists, where A and B may be singular or plural. The character "/" usually indicates an "or" relationship between the associated objects. "At least one of the following items (pieces)" or a similar expression thereof refers to any combination of these items, including any combination of singular items (pieces) or plural items (pieces). For example, at least one item (piece) of a, b, or c may represent: a, b, c, a and b, a and c, b and c, or a, b, and c, where a, b, and c may be singular or plural.

In addition, unless otherwise specified, ordinal numbers such as "first" and "second" mentioned in embodiments of this application are used to distinguish between a plurality of objects, but are not intended to limit priorities or importance of the plurality of obj ects. For example, a first sub-interface and a second sub-interface are merely used to distinguish between different sub-interfaces, but do not indicate different priorities, importance, or the like of the sub-interfaces.

An embodiment of this application provides an application display method. The method includes: displaying a first interface of a first application; and detecting a first operation in the first interface, where the first operation is used to display a second interface of the first application, the second interface includes a first sub-interface and a second sub-interface, the first sub-interface is used to display a running status of a target vehicle on an electronic map, and the second sub-interface is used to provide an upgrade function. In this embodiment of this application, the running status of the target vehicle on the electronic map is displayed in the first sub-interface, and the upgrade function is provided in the second sub-interface. When the target vehicle is checked before upgrade, the running status of the target vehicle on the electronic map is obtained, to determine whether to upgrade the target vehicle. This can prevent a vehicle owner from performing remote misoperations, and improve interaction experience in an upgrade process.

The following describes related steps in an embodiment of this application with reference to specific embodiments.

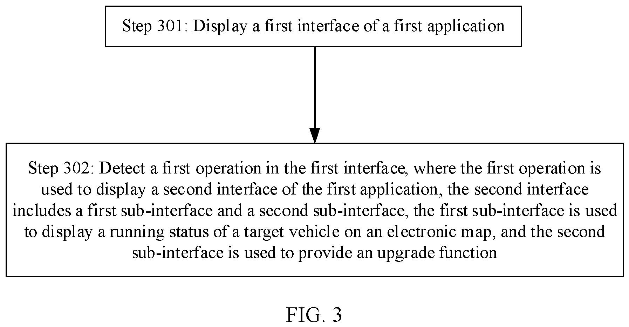

FIG. 3 shows an application display method according to an embodiment of this application. The method may be applied to an entire vehicle, a vehicle-mounted device (for example, a display) in a vehicle, or an electronic device (for example, a smartphone). As shown in FIG. 3, the application display method 300 includes but is not limited to the following steps.

Step 301: Display a first interface of a first application.

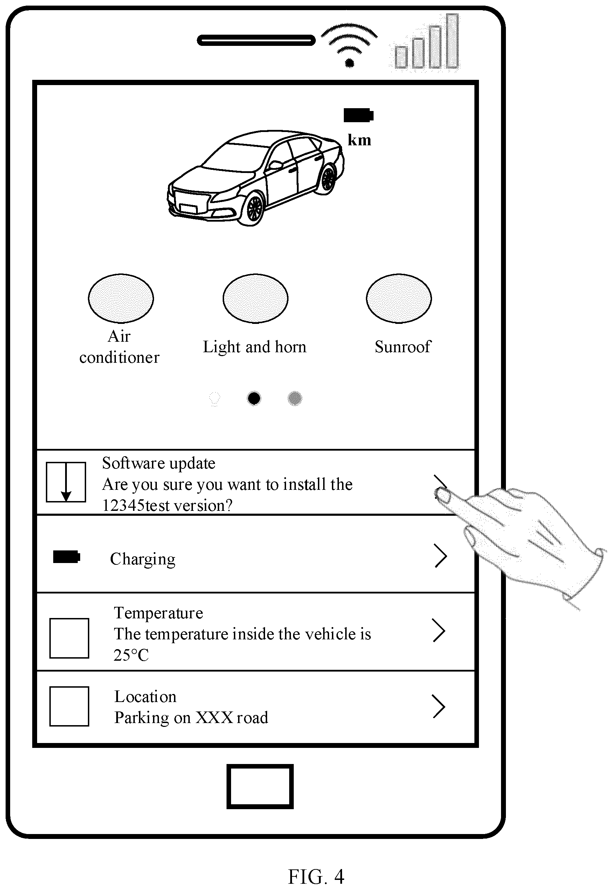

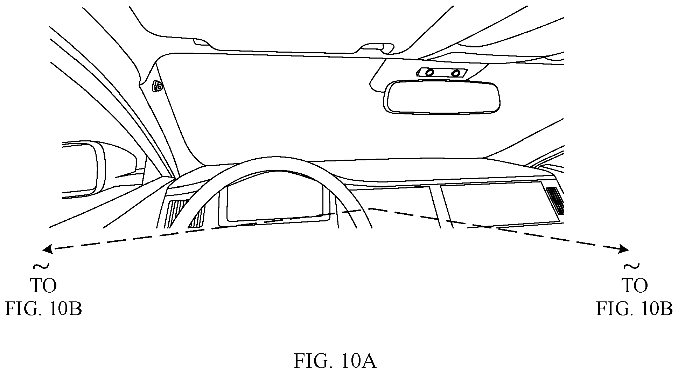

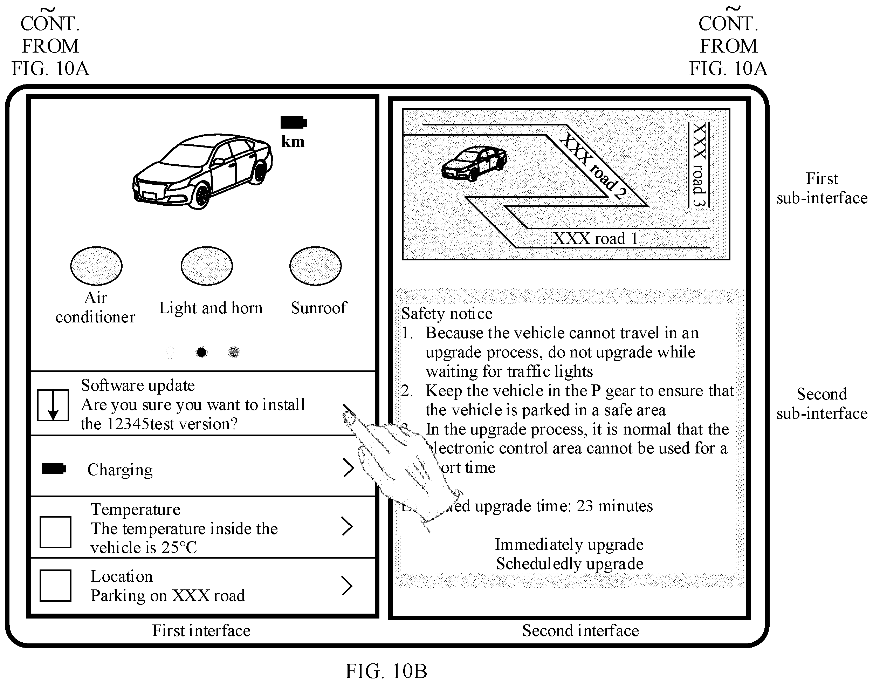

In this embodiment of this application, the first interface of the first application may be displayed on a client used by a vehicle owner, for example, the first interface of the first application is displayed on an app of a smartphone, as shown in FIG. 4; the first interface of the first application may be displayed on a display of a target vehicle, as shown in FIG. 10A and FIG. 10B; the first interface of the first application is displayed on an augmented reality head-up display (Augmented Reality Head-Up Display, AR-HUD) of a target vehicle (not shown in the figure); or the first interface of the first application may be displayed in a human-machine interface (Human-Machine Interface, HMI) of a target vehicle (not shown in the figure). This is not limited in embodiments of this application.

Optionally, the first application includes an application used by the vehicle owner to perform remote OTA upgrade on the target vehicle.

Optionally, the first interface includes an interface displayed after the first application is opened.

Step 302: Detect a first operation in the first interface. Specifically, after the first operation is detected in the first interface, a second interface of the first application is displayed, where the second interface includes a first sub-interface and a second sub-interface, the first sub-interface is used to display a running status of a target terminal on an electronic map, and the second sub-interface is used to provide an upgrade function.

Optionally, the target terminal may be a car, a truck, a motorcycle, a bus, a ship, an airplane, an uncrewed aerial vehicle, a helicopter, a lawn mower, an entertainment vehicle, a playground vehicle, a construction device, a tram, a golf cart, a train, or the like. This is not specifically limited in embodiments of this application. For ease of description, an example in which the target terminal is a target vehicle is mainly used in the following for description.

It may be understood that the first sub-interface includes a running status of the target vehicle on the electronic map. Location information of the vehicle can be viewed in real time on the electronic map. The second sub-interface is used to provide the upgrade function. The upgrade function may include immediate upgrade and scheduled upgrade. The first sub-interface and the second sub-interface are displayed in different manners. The following provides several possible implementations.

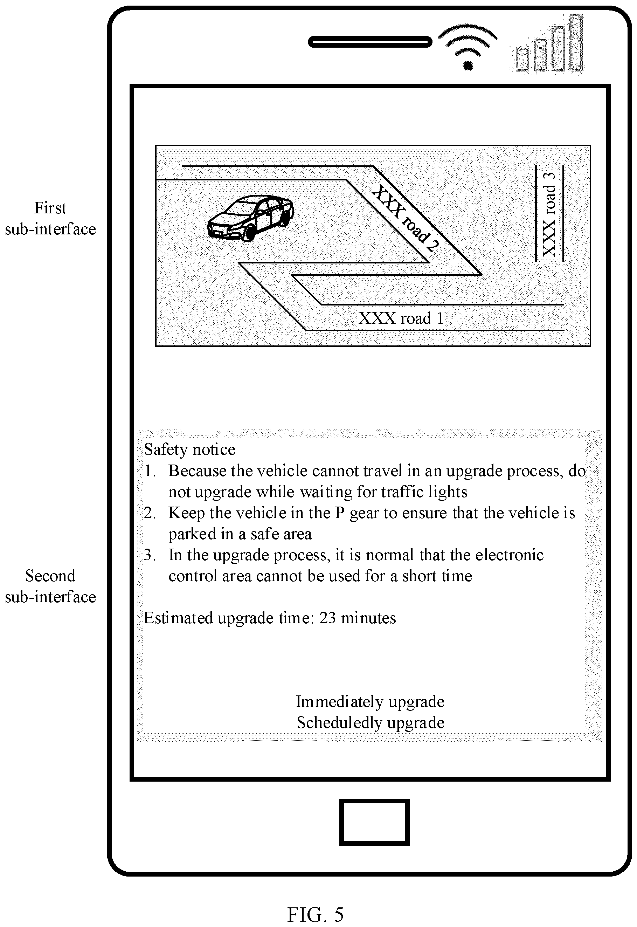

In a possible implementation, after the finger taps software update in FIG. 4, that is, after the first operation is detected on the display, an interface shown in FIG. 5 is displayed, the first sub-interface and the second sub-interface are displayed in a same interface of the display, the first sub-interface and the second sub-interface are arranged up and down, and the first sub-interface is located upper than the second sub-interface. It may be understood that the first sub-interface may alternatively be located lower than the second sub-interface, or the first sub-interface and the second sub-interface may be arranged left and right. This is not limited in embodiments of this application.

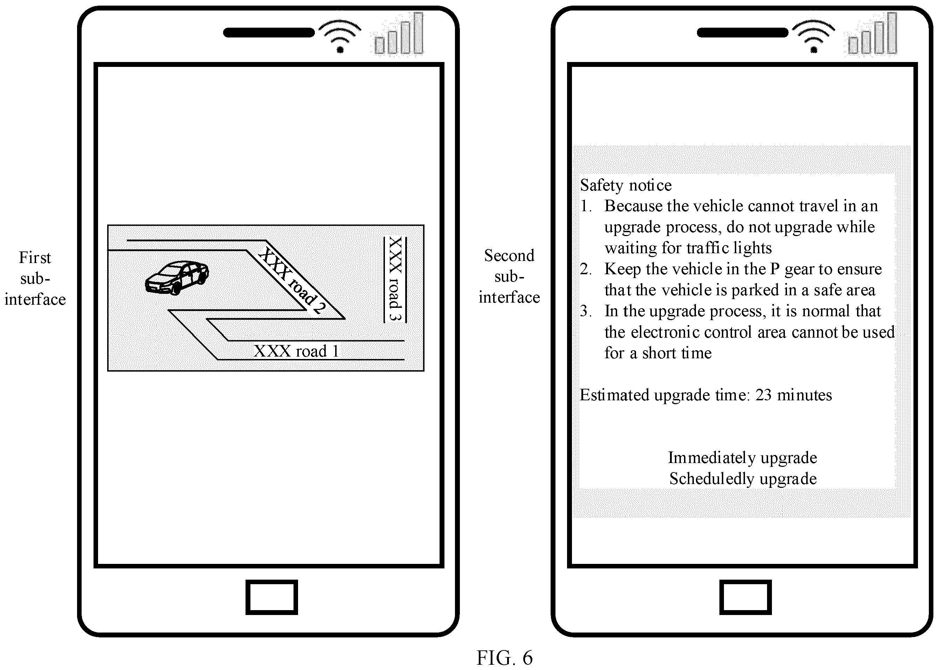

In another possible implementation, after the finger taps software update in FIG. 4, that is, after the first operation is detected on the display, an interface shown in FIG. 6 is displayed. As shown in FIG. 6, the first sub-interface and the second sub-interface are displayed in different interfaces of the display. After the first operation is detected, the first sub-interface, that is, the running status of the target vehicle on the electronic map, is first displayed, and then the second sub-interface is displayed, that is, the upgrade function is provided.

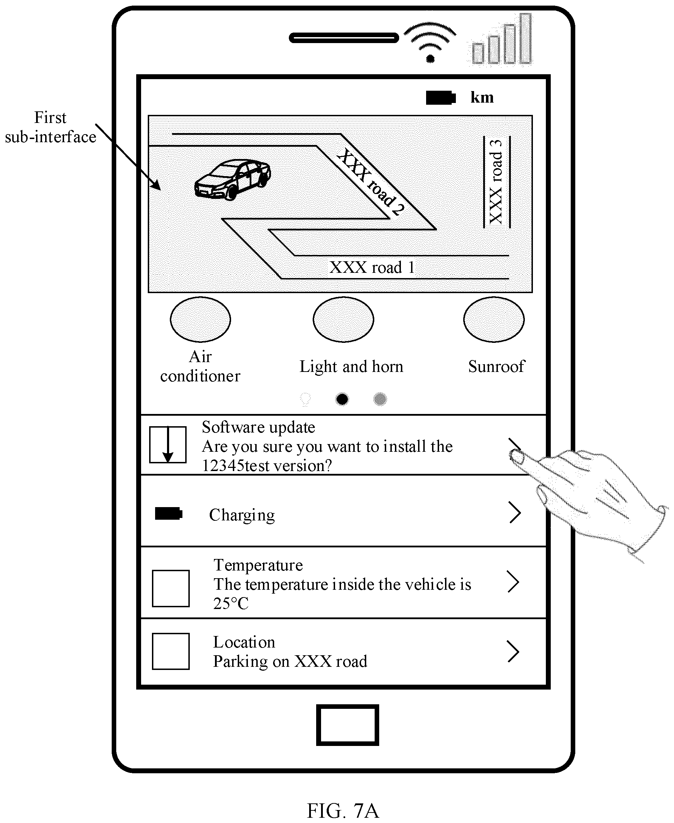

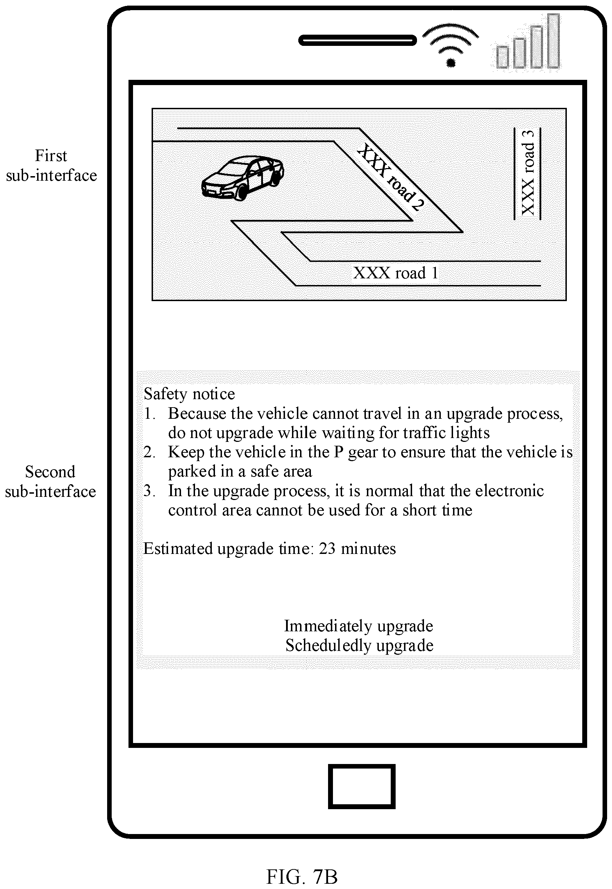

In another possible implementation, after the finger in FIG. 7A taps software update, that is, after the first operation is detected on the display, an interface shown in FIG. 7B is displayed. As shown in FIG. 7A and FIG. 7B, the first sub-interface is displayed in both the first interface and the second interface. For example, the first sub-interface is embedded in the first interface. When the first operation in the first interface is detected, the second interface includes the first sub-interface and the second sub-interface. The first sub-interface is used to display the running status of the target vehicle on the electronic map, and the second sub-interface is used to provide the upgrade function.

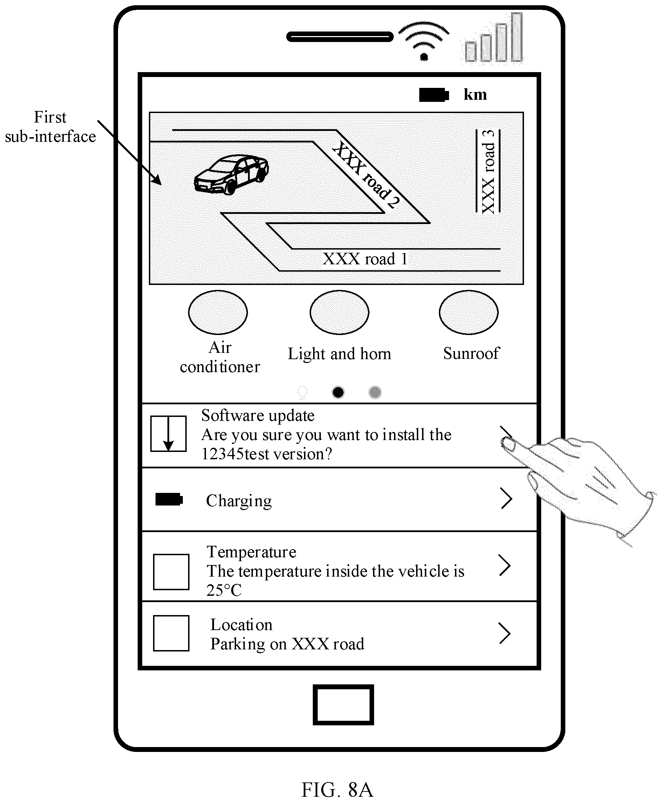

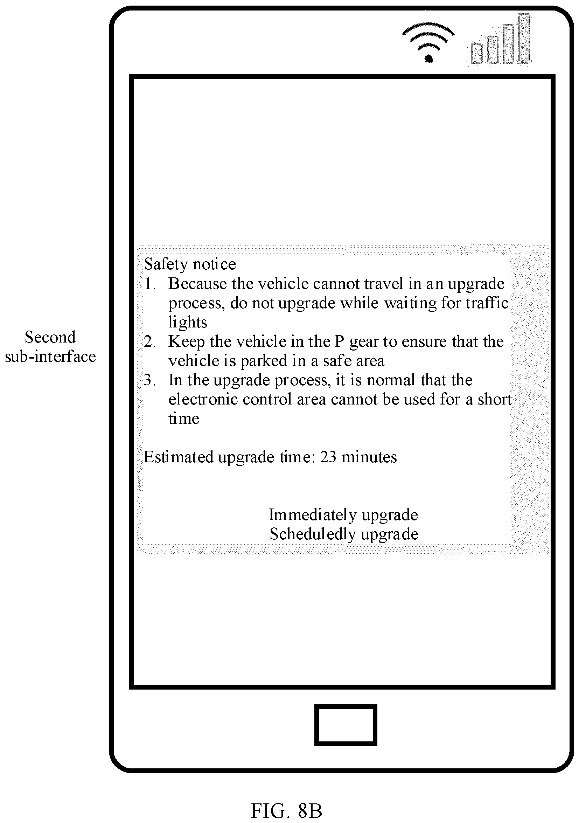

In another possible implementation, after the finger in FIG. 8A taps software update, that is, after the first operation is detected on the display, an interface shown in FIG. 8B is displayed. As shown in FIG. 8A and FIG. 8B, the first sub-interface is displayed in the first interface. For example, the first sub-interface is embedded in the first interface. The first sub-interface is used to display the running status of the target vehicle on the electronic map. When the first operation in the first interface is detected, the second interface includes the second sub-interface. The second sub-interface is used to provide the upgrade function.

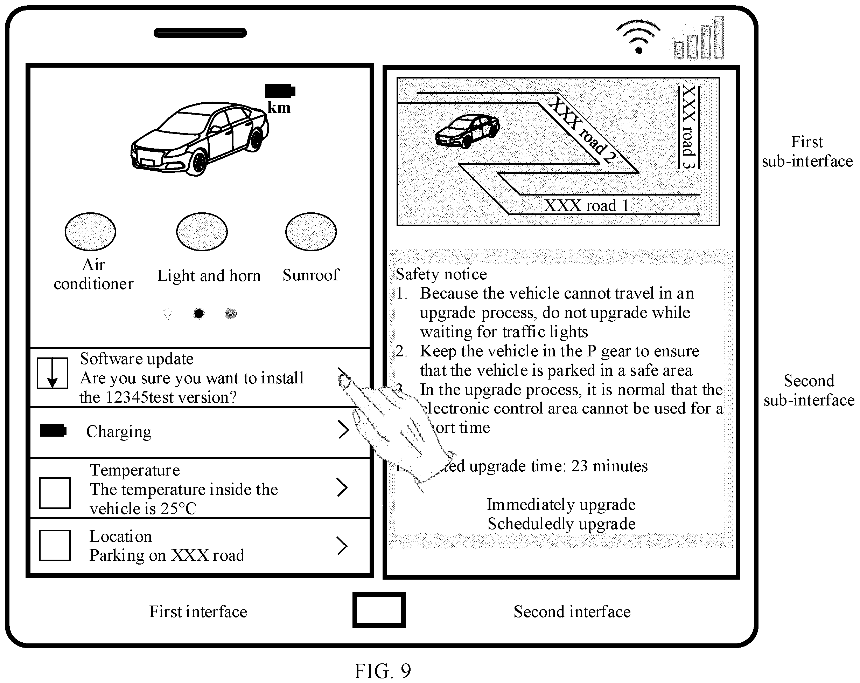

In another possible implementation, the electronic device is a pad, a foldable-screen mobile phone (as shown in FIG. 9), or a large in-vehicle infotainment display (as shown in FIG. 10A and FIG. 10B). After the finger taps software update in FIG. 9 or FIG. 10A and FIG. 10B, that is, after the first operation is detected on the display, an interface shown in FIG. 9 or FIG. 10A and FIG. 10B is displayed. As shown in FIG. 9 or FIG. 10A and FIG. 10B, when the first operation in the first interface is detected, the second interface includes the first sub-interface and the second sub-interface. The first sub-interface is used to display the running status of the target vehicle on the electronic map, and the second sub-interface is used to provide the upgrade function.

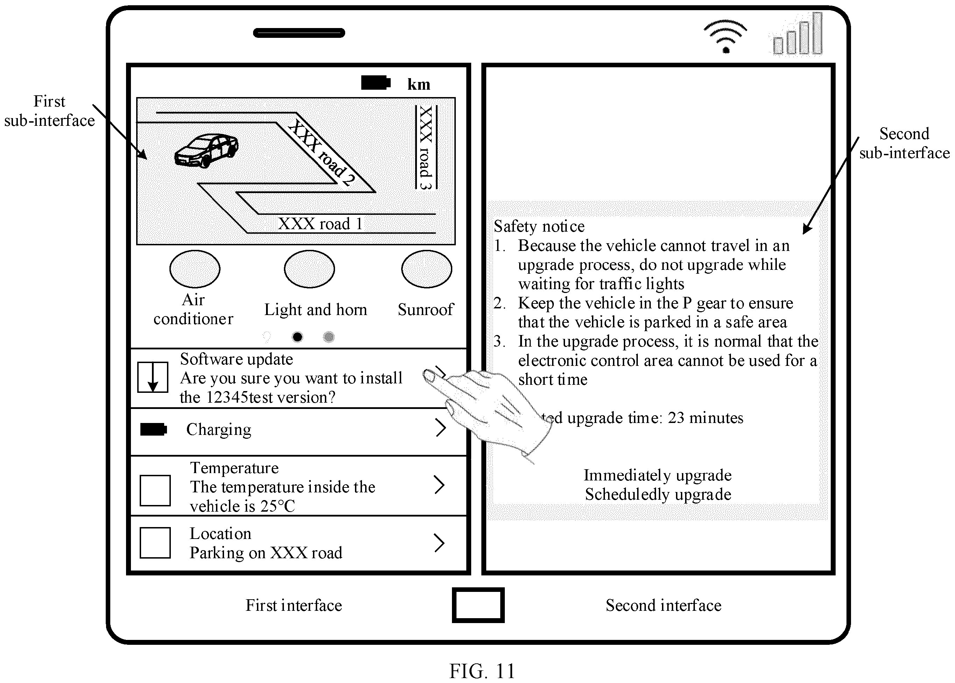

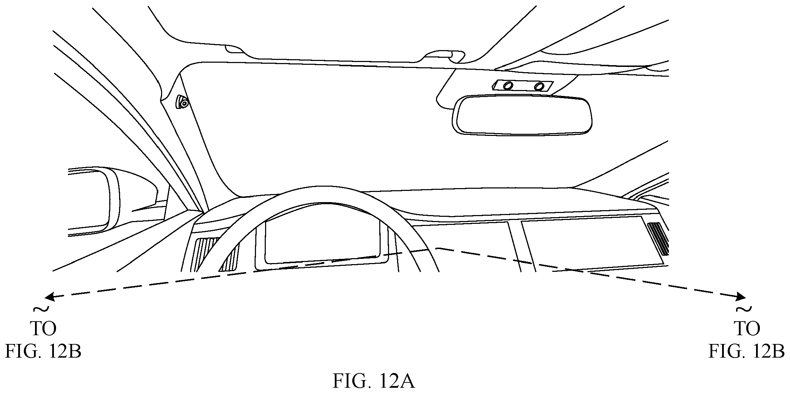

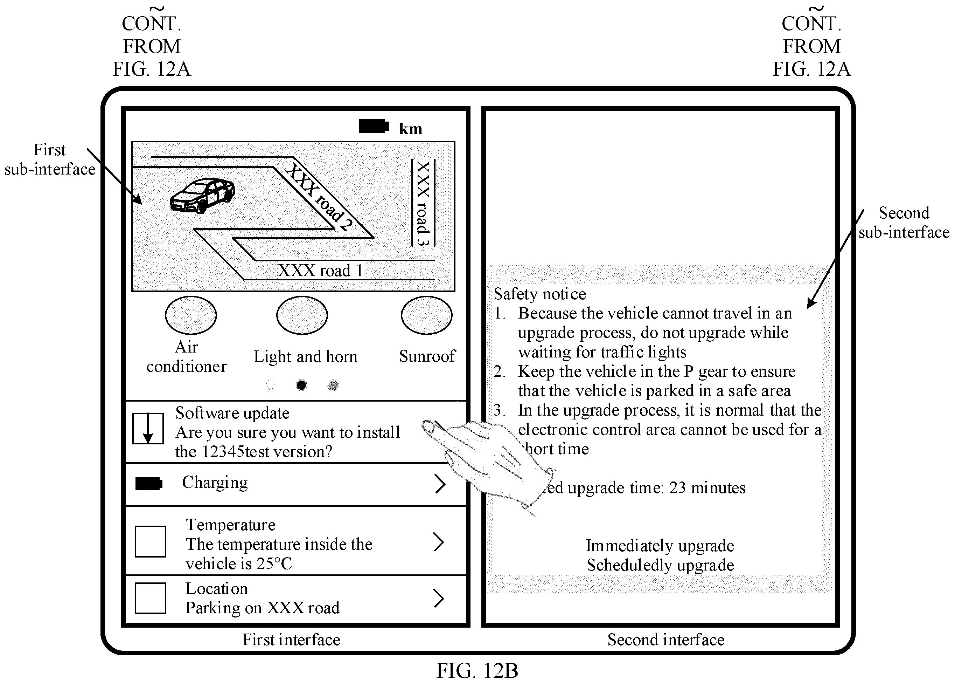

In another possible implementation, the electronic device is a pad, a foldable-screen mobile phone (as shown in FIG. 11), or a large in-vehicle infotainment display (as shown in FIG. 12A and FIG. 12B). After the finger taps software update in FIG. 11 or FIG. 12A and FIG. 12B, that is, after the first operation is detected on the display, an interface shown in FIG. 11 or FIG. 12A and FIG. 12B is displayed. As shown in FIG. 11 or FIG. 12A and FIG. 12B, the first interface includes the first sub-interface. The first sub-interface is used to display the running status of the target vehicle on the electronic map. When the first operation in the first interface is detected, the second sub-interface is used to provide the upgrade function.

It may be understood that the foregoing different display and arrangement manners of the interfaces are merely examples. The first sub-interface and the second sub-interface may be displayed in a pop-up manner, an embedded manner, or the like. For example, when the first operation is detected, the first sub-interface pops up, and the running status of the target vehicle on the electronic map is displayed in the first sub-interface. The second sub-interface is displayed when a user taps the first sub-interface. For another example, after the first sub-interface pops up, the running status of the target vehicle on the electronic map and a countdown are displayed in the first sub-interface, and after the countdown ends, the second sub-interface is displayed.

It may be understood that the first operation is described as an operation of performing software update by tapping the screen by using the finger is merely an example. Alternatively, the first operation may be described as an operation of performing software update through screen operations such as finger touch or sliding, may be described as an operation of performing software update by entering a sound instruction, or may be described as an operation of performing software update in another manner. This is not limited in embodiments of this application.

Optionally, the second sub-interface is used to provide an OTA upgrade function for the target vehicle.

Optionally, the running status of the target vehicle on the electronic map includes location information of the target vehicle. Specifically, the location information includes dynamic location information of the target vehicle or real-time location information of the target vehicle. The location information may be a road section in which the target vehicle is currently located, may be a real-time GPS location of the target vehicle, or may be longitude and latitude of the target vehicle. This is not limited in embodiments of this application. The location information of the target vehicle is displayed on the electronic map, so that the vehicle owner can view the real-time location information of the vehicle on the app of the mobile phone, to determine whether to remotely upgrade the vehicle.

Optionally, the first sub-interface is further used to display or prompt an upgrade area, and the upgrade area is used to define an area in which the upgrade function can be performed. The upgrade area is prompted or displayed in the first sub-interface, so that the vehicle owner determines whether the target vehicle is in an area in which upgrade can be performed, to determine whether to upgrade the vehicle.

Optionally, the upgrade area is predefined or preconfigured.

Optionally, a second operation is detected, where the second operation is used to select the upgrade area on the electronic map; or a second operation is detected, where the second operation is used to enter location information of the upgrade area. The second operation may be performed before upgrade, or may be performed in an upgrade process. This is not limited in embodiments of this application.

Optionally, in an embodiment of this application, the upgrade area may be predefined or preconfigured. The predefined or preconfigured upgrade area can effectively ensure that the vehicle is to be upgraded in a safe area. When the app of the mobile phone of the vehicle owner receives an upgrade notification, it is determined whether the vehicle is in the predefined or preconfigured safe area in which upgrade can be performed. If the vehicle is in the area, the target vehicle is upgraded. This can ensure driving safety of the target vehicle. It may be understood that, in a process of using the vehicle by the vehicle owner, the upgrade area may alternatively be temporarily defined based on a requirement of the vehicle owner, and the temporarily defined upgrade area may be deleted based on a requirement. This ensures flexibility of setting the upgrade area.

Optionally, in an embodiment of this application, the upgrade area may be directly or indirectly set. Specifically, the user may set or delete the upgrade area based on a requirement or preference of the user, or the user may send a request message to the vehicle owner to request to set the upgrade area. For example, A drives a vehicle of B to travel, and a vehicle end pushes a function that A prefers. A enters a second operation, and may specify an upgrade area within an authorization range, to upgrade the target vehicle. After upgrade is completed, A may delete the upgrade area. B may alternatively enter a second operation based on a request of A, to specify or delete an upgrade area. Specifically, A sends a request message for requesting to specify the upgrade area to B, where the request message indicates a target area; and B specifies the upgrade area based on the request message. Optionally, after upgrade is completed, B deletes the target area.

In an embodiment of this application, the upgrade area may be identified by using any shape like a circle or a box. It may be understood that the upgrade area may alternatively be an electronic fence, and the upgrade area of the target vehicle is delineated by using the electronic fence.

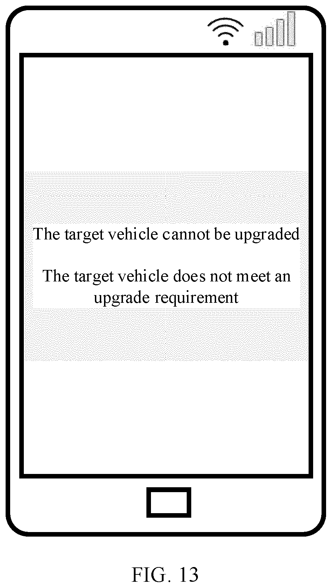

Optionally, feedback information is displayed, where the feedback information indicates that the target vehicle cannot be upgraded or the target vehicle does not meet an upgrade requirement. For example, as shown in FIG. 13, the feedback information is displayed when the target vehicle cannot be upgraded or does not meet the upgrade requirement. A scenario in which the target vehicle cannot be upgraded or does not meet the upgrade requirement includes but is not limited to at least one of the following: A charging plug of the target vehicle is in a disconnected state, an on-board diagnostics (On-board diagnostics, OBD) system of the target vehicle is in a disconnected state, the target vehicle is in P-gear, a filler cap of the target vehicle is in a closed state, a caliper of a hand brake of the target vehicle is in a clamped state, a battery level of the target vehicle is in a flashable state, and the target vehicle is in a non-ignition state.

Optionally, the first interface and the second interface correspond to different attribute information.

Optionally, the first application includes an application app of the vehicle owner, and the application app of the vehicle owner includes OTA upgrade software of the vehicle owner.

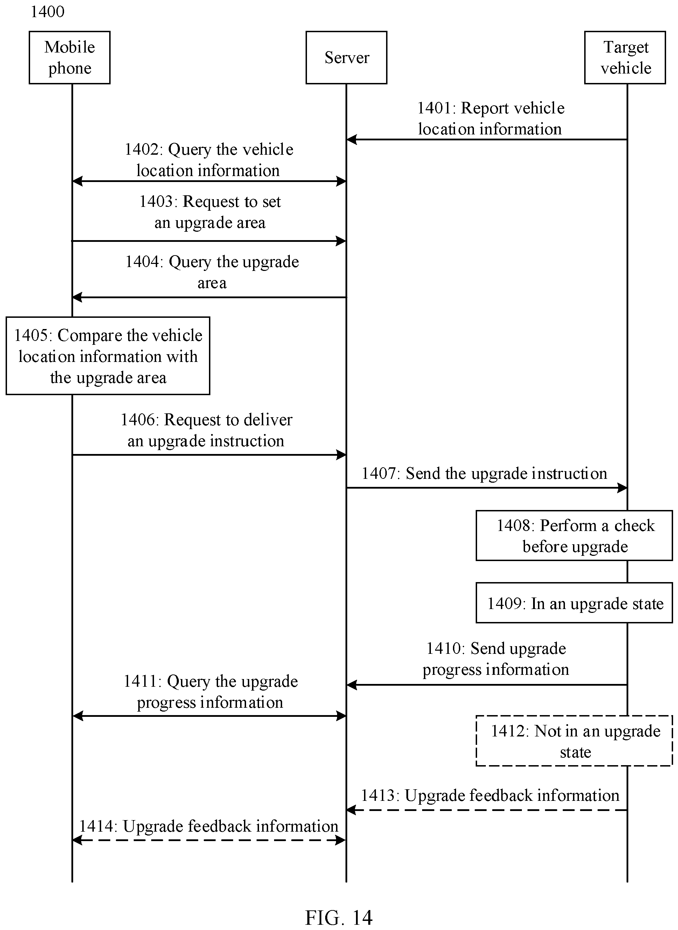

FIG. 14 is a schematic interaction flowchart of an upgrade method according to an embodiment of this application. In the embodiment shown in FIG. 14, interaction between a mobile phone, a server, and a target vehicle is used as an example for description. The mobile phone includes an application app for software upgrade, and the application app is used to display an upgrade interface. As shown in FIG. 14, the method 1400 includes but is not limited to the following steps.

Step 1401: The target vehicle reports vehicle location information to the server. Optionally, the vehicle location information includes GPS data.

It may be understood that the target vehicle may periodically report the vehicle location information to the server. Alternatively, a request may be sent by using the mobile phone to the server to view the vehicle location information, the server sends an instruction to the target vehicle, and the target vehicle reports the vehicle location information according to the instruction.

Optionally, the vehicle location information includes real-time GPS data of the target vehicle, or includes longitude and latitude information, or may include information about route planning in a future time period, or the like. This is not limited in embodiments of this application.

Step 1402: A user queries the vehicle location information by using the mobile phone. Correspondingly, the server sends the vehicle location information to the mobile phone.

Step 1403: The mobile phone sends, to the server, a message for requesting to set an upgrade area, where the upgrade area may be set before first upgrade, or may be set based on a user requirement. After the upgrade area is set, that the upgrade area has been set is fed back to the mobile phone. The settings are stored on a cloud, and the upgrade area can be enlarged or modified. If setting is not performed on the mobile phone before upgrade, the user is prompted to perform setting.

Step 1404: The mobile phone sends a request message for querying the upgrade area to the server, and the server sends upgrade area information to the mobile phone based on the predefined or preconfigured upgrade area.

Step 1405: The mobile phone compares the vehicle location information with the upgrade area, and determines, based on a comparison result, whether to deliver an upgrade instruction.

Step 1406: When the vehicle location information is in the upgrade area, send, to the server by using the mobile phone, a request for delivering the upgrade instruction. If the vehicle location information is not in the upgrade area, an upgrade procedure is terminated. Alternatively, an upgrade area is re-specified based on a requirement of the user, so that a location of the vehicle is in the upgrade area; and then the request for delivering the upgrade instruction is sent to the server by using the mobile phone.

Step 1407: The server sends the upgrade instruction to the target vehicle. Correspondingly, the target vehicle receives the upgrade instruction.

Further, the target vehicle in the upgrade area receives the upgrade instruction. For example, that the target vehicle in the upgrade area receives the upgrade instruction means that the target vehicle outside the upgrade area cannot receive the upgrade instruction. In this embodiment, it can be ensured that the target vehicle in the upgrade area is upgraded. This improves interaction experience in an upgrade process.

Optionally, the upgrade instruction includes preset time information for software upgrade, and the preset time information indicates a preset time required for software upgrade.

Optionally, a target time is compared with the preset time, and software upgrade is performed when the preset time is greater than the target time. In a possible implementation, a user using the target vehicle compares the target time with the preset time; or a user enters the target time into the target vehicle, and the target vehicle compares the target time with the preset time and performs software upgrade when the preset time is greater than the target time. In another possible implementation, the vehicle owner obtains the target time by using the mobile phone, compares the target time with the preset time, and performs software upgrade when the preset time is greater than the target time. For example, the target vehicle receives the upgrade instruction, and the user obtains, based on the preset time information included in the upgrade instruction, a time required for software upgrade. When the user of the target vehicle has a shopping requirement and needs to leave the target vehicle, the user may estimate a target time required for completing the shopping requirement, compare the target time with the preset time required for software upgrade, and perform software upgrade when the preset time is greater than the target time. Alternatively, the user may feed back a time required for completing shopping to the vehicle owner; and the vehicle owner compares the target time with the preset time required for software upgrade, and performs software upgrade when the preset time is greater than the target time.

The preset time for software upgrade is obtained, the preset time is compared with an actual time required by the user to complete a task, and software upgrade is performed when the preset time is greater than the target time. In this way, safety of the target vehicle in a software upgrade process is ensured while a normal activity of the user is ensured.

Optionally, the upgrade instruction further includes preset battery level information required for upgrade, and the preset battery level information indicates a first battery level.

Optionally, when it is determined that the preset time meets a condition, target battery level information required by the target vehicle to complete a task is obtained; and software upgrade is performed when a sum of the preset battery level and the target battery level is greater than or equal to a remaining battery level of the target vehicle. In a possible implementation, the target vehicle performs determining, and performs software upgrade when the sum of the preset battery level and the target battery level is greater than or equal to the remaining battery level of the target vehicle. In another possible implementation, the vehicle owner performs determining by using the mobile phone, and performs software upgrade when the sum of the preset battery level and the target battery level is greater than or equal to the remaining battery level of the target vehicle. For example, the target vehicle receives the upgrade instruction, and when it is determined that the preset time meets the condition, the user obtains, based on the preset battery level information included in the upgrade instruction, the first battery level required for software upgrade. The user of the target vehicle estimates battery level information required for reaching a destination. The battery level information indicates a second battery level required by the target vehicle to travel to the destination. Software upgrade is performed when a sum of the first battery level and the second battery level is greater than or equal to the remaining battery level of the target vehicle. In this way, safety of the target vehicle in the software upgrade process is ensured while the normal activity of the user is ensured.

In the foregoing embodiment, determining is first performed in a time dimension, then determining is performed in a battery level dimension, and software upgrade is performed when both conditions are met. It may be understood that the time dimension and the battery level dimension each may alternatively be used as a separate determining basis. Alternatively, determining may be first performed in the battery level dimension, then determining is performed in the time dimension, and software upgrade is performed when both conditions are met. This is not limited in embodiments of this application.

Optionally, both a primary account and a sub-account of the app of the mobile phone that are associated with the target vehicle receive the upgrade instruction. For example, the target vehicle is associated with a family member A and a family member B, the member A corresponds to the primary account, the member B corresponds to the sub-account, and both the member A and the member B can receive the upgrade instruction. To be specific, when the member B uses the target vehicle, the member B receives the upgrade instruction, and the member B may determine, based on a status of the target vehicle, whether to perform upgrade. In this case, the member A can also receive the upgrade instruction. If the member A prepares to upgrade the target vehicle, the member A needs to confirm the foregoing pieces of information one by one, and can remotely upgrade the target vehicle only after confirmation succeeds.

Optionally, after the mobile phone completes a check, the mobile phone sends a request instruction to the server. The server pushes upgrade-related information (a time required for upgrade, an estimated remaining battery level after upgrade, and the like) to the sub-account of the app for confirmation. The sub-account determines, based on a current vehicle usage status, whether to agree to perform upgrade. If upgrade is agreed or no processing is performed until the time expires, the process proceeds to a next step. Otherwise, information indicating that upgrade is not agreed is returned to the cloud, and then the message is pushed to the primary account.

It may be understood that the upgrade instruction includes the preset time information and the preset battery level information. In another possible implementation, the target vehicle receives a second instruction, where the second instruction indicates the preset time information; and the target vehicle further receives a third instruction, where the third instruction is used to receive the preset battery level information. In another possible implementation, the target vehicle receives a fourth instruction, where the fourth instruction indicates the preset time information and the preset battery level information. In embodiments of this application, the preset time information and the preset battery level information may alternatively be delivered in another form. This is not limited in embodiments of this application.

Step 1408: The target vehicle performs a check before upgrade. To be specific, an upgrade state of the vehicle is checked.

Optionally, the upgrade state check includes querying current vehicle status information. The vehicle status information includes any one or more of the following:

### (1) Battery level information

When a power battery level percentage of the target vehicle is greater than or equal to a preset battery level, the target vehicle can be upgraded. For example, when the power battery level percentage of the target vehicle is greater than or equal to 25% of a battery capacity, the target vehicle can be upgraded.

When a battery level of the target vehicle meets a flashing condition, the target vehicle can be upgraded. For example, when the battery level of the target vehicle is greater than or equal to 50% of the battery capacity, the target vehicle can be upgraded.

### (2) Vehicle speed information

When a vehicle speed of the target vehicle is less than or equal to a preset vehicle speed, the target vehicle can be upgraded. For example, if the vehicle speed of the target vehicle is less than or equal to 3 km/h, or the vehicle speed of the target vehicle is 0 km/h, the target vehicle can be upgraded.

### (3) Gear status information

When the target vehicle is in "P-gear", the target vehicle can be upgraded.

### (4) "Ignition" status information

If the target vehicle is a fuel vehicle or a hybrid vehicle, during the state check, whether the target vehicle is in an "ignition" state is checked. If the target vehicle is in a "non-ignition" state, the target vehicle can be upgraded.

### (5) Status information of an on-board diagnostics (On-board diagnostics, OBD) system

When the OBD system is in a disconnected state, the target vehicle can be upgraded.

### (6) Status information of a hand brake

When a caliper of the hand brake of the target vehicle is in a clamped state, the target vehicle can be upgraded.

### (7) Status information of a fast charging plug/ a charging plug

When the fast charging plug or the charging plug is in a disconnected state, the target vehicle can be upgraded.

### (8) Status information of a filler cap

If the target vehicle is a fuel vehicle or a hybrid vehicle, during the state check, the filler cap of the target vehicle is checked. When the filler cap of the target vehicle is in a closed state, the target vehicle can be upgraded.

It may be understood that the upgrade state further includes at least one of the following: The charging plug of the target vehicle is in a disconnected state, the on-board diagnostics OBD system of the target vehicle is in a disconnected state, the target vehicle is in P-gear, the filler cap of the target vehicle is in a closed state, the caliper of the hand brake of the target vehicle is in a clamped state, the battery level of the target vehicle is in a flashable state, or the target vehicle is in a non-ignition state.

Optionally, in step 1409, when the target vehicle is in the upgrade state, perform an upgrade operation according to the upgrade instruction; or in step 1412, when the target vehicle is not in the upgrade state, send feedback information, where the feedback information indicates that the target vehicle cannot be upgraded or the target vehicle does not meet an upgrade requirement.

Optionally, the upgrade state includes that the target vehicle is in a guarded state. For example, if the target vehicle is to be remotely upgraded by using the mobile phone, the target vehicle checks the guarded state of the target vehicle. Checking the guarded state of the vehicle is confirming that a user who is using the vehicle is not in the target vehicle and the vehicle is in a locked state.

Optionally, in step 1410, in a process in which the target vehicle performs the upgrade operation (step 1409), the target vehicle sends upgrade progress information to the server, and the server receives and stores the upgrade progress information.

Optionally, in step 1411, the mobile phone initiates a request message for querying the upgrade progress information to the server, the server sends the upgrade progress information to the mobile phone in response to the request message, and the app of the mobile phone displays the upgrade progress information.

Optionally, in step 1413, when the target vehicle is not in the upgrade state (step 1412), the target vehicle sends the feedback information to the server, where the feedback information indicates that the target vehicle cannot be upgraded or the target vehicle does not meet the upgrade requirement.

Optionally, in step 1414, the mobile phone may initiate a request message for querying the upgrade feedback information to the server, the server sends the upgrade feedback information to the mobile phone in response to the request message, and the app of the mobile phone displays the feedback information.

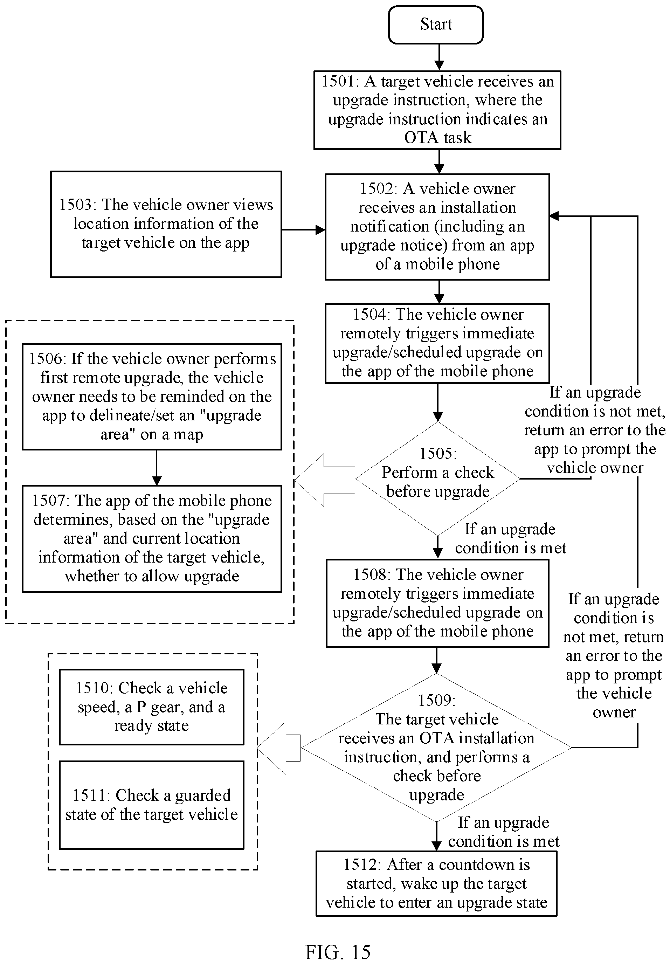

FIG. 15 is a block flowchart of an upgrade method according to an embodiment of this application. As shown in FIG. 15, the method 1500 includes but is not limited to the following steps.

Step 1501: A target vehicle receives an upgrade instruction, where the upgrade instruction indicates an OTA task. Optionally, the target vehicle completes downloading and storing of the OTA task.

Step 1502: A vehicle owner receives an installation notification, where the installation notification is a notification indicating whether to install a software package corresponding to the current OTA task onto the target vehicle, and the installation notification includes an upgrade notice.

Optionally, in step 1503, after a mobile phone of the vehicle owner receives the installation notification, the vehicle owner views running status information of the vehicle on an electronic map on an app of the mobile phone, where the running status information includes location information of the target vehicle.

Step 1504: When the location information of the target vehicle meets an upgrade condition, the vehicle owner remotely triggers immediate upgrade or scheduled upgrade on the app of the mobile phone.

Step 1505: The target vehicle performs a check before upgrade. Content of the check before upgrade includes: optionally, step 1506 and step 1507. To be specific, if the vehicle owner performs first remote upgrade, the vehicle owner needs to be reminded on the app of the mobile phone to delineate or set an "upgrade area" on the electronic map. The mobile phone determines, based on the "upgrade area" and current location information of the target vehicle, whether to allow upgrade. If the current location information of the target vehicle is not in the upgrade area, the upgrade condition is not met, error prompt information is returned, and the vehicle owner is prompted on the app. If the current location information of the target vehicle is in the upgrade area, the upgrade condition is met, and the process proceeds to step 1508.

Step 1508: When the location information of the target vehicle meets the upgrade condition, the vehicle owner remotely triggers immediate upgrade or scheduled upgrade on the app of the mobile phone.

Step 1509: The target vehicle receives an OTA installation instruction, and performs a check before upgrade. Content of the check before upgrade includes: optionally, step 1510 and step 1511. To be specific, it is first checked whether a vehicle speed, P-gear, and a ready state of the target vehicle to meet an upgrade condition, and then a guarded state of the target vehicle is checked, to confirm that a user is not in the target vehicle and the vehicle is locked. If the foregoing status does not meet the upgrade condition, error prompt information is returned, and the vehicle owner is prompted on an app, where the app includes an app of the target vehicle or the app of the mobile phone of the vehicle owner. If the foregoing status meets the upgrade condition, the process proceeds to step 1512.

Step 1512: On the premise that the status check before upgrade meets the upgrade condition, start a countdown, and wake up the target vehicle to enter an upgrade state, to complete upgrade.

It may be understood that a method for check before upgrade is added before remote OTA upgrade is performed by using the mobile phone. One or more of the real-time location information, the "upgrade area", and the "guarded state" of the target vehicle are checked, so that security of remote OTA upgrade can be improved. The target vehicle can be checked in advance, so that a misoperation caused by information asymmetry is avoided.

In the foregoing embodiment, the vehicle owner may be understood as an owner of a primary account associated with the target vehicle, and the user may be understood as an owner of a sub-account associated with the target vehicle. A scenario of the foregoing embodiment includes: When the user is using the target vehicle, the mobile phone of the vehicle owner checks a status of the target vehicle before upgrade when receiving an OTA upgrade task. Content of the check includes one or more of the real-time location information, the "upgrade area", and the "guarded state" of the target vehicle.

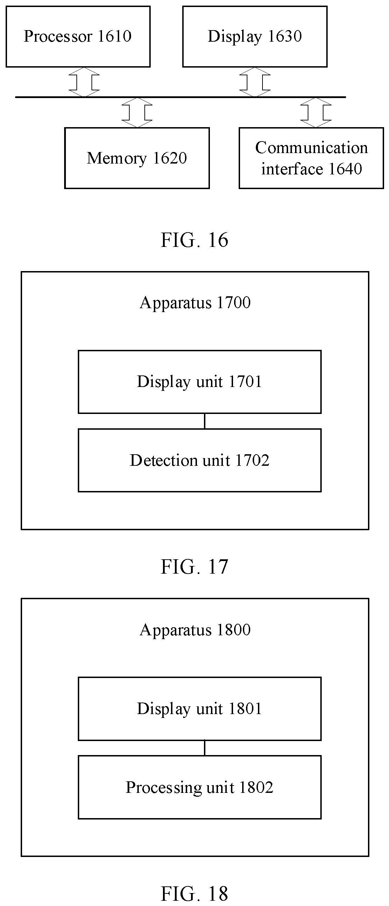

FIG. 16 is a schematic block diagram of an electronic device 1600 according to an embodiment of this application. The electronic device 1600 shown in FIG. 16 includes at least one processor 1610, a memory 1620, and a display 1630, and optionally, may further include a communication interface 1640.

The memory 1620 may be a volatile memory, for example, a random access memory. The memory may alternatively be a non-volatile memory, for example, a read-only memory, a flash memory, a hard disk drive (hard disk drive, HDD), or a solid-state drive (solid-state drive, SSD). Alternatively, the memory 1620 is any other medium that can be used to carry or store expected program code in an instruction or data structure form and that can be accessed by a computer. However, this is not limited thereto. The memory 1620 may be a combination of the foregoing memories.

A specific connection medium between the processor 1610 and the memory 1620 is not limited in embodiments of this application.

The electronic device shown in FIG. 16 further includes the display 1630, and the display is configured to display data processed by the processor 1610.

The electronic device shown in FIG. 16 further includes the communication interface 1640. When communicating with another device, the processor 1610 may transmit data through the communication interface 1640.

When the electronic device is in the form shown in FIG. 16, the processor 1610 shown in FIG. 16 may invoke computer-executable instructions stored in the memory 1620, so that the apparatus 1600 can perform the method performed by the apparatus in any one of the foregoing method embodiments.

FIG. 17 is a schematic block diagram of an application display apparatus 1700 according to an embodiment of this application. The apparatus 1700 includes: a display unit 1701, configured to display a first interface of a first application; and a detection unit 1702, configured to detect a first operation in the first interface, where the first operation is used to display a second interface of the first application, the second interface includes a first sub-interface and a second sub-interface, the first sub-interface is used to display a running status of a target vehicle on an electronic map, and the second sub-interface is used to provide an upgrade function.

In a possible implementation, the running status of the target vehicle on the electronic map includes location information of the target vehicle.

In a possible implementation, the location information of the target vehicle includes real-time location information of the target vehicle or dynamic location information of the target vehicle.

In a possible implementation, the first sub-interface is further used to display or prompt an upgrade area, and the upgrade area is used to define an area in which the upgrade function can be performed.

In a possible implementation, the upgrade area is predefined or preconfigured.

In a possible implementation, the detection unit 1702 is further configured to: detect a second operation, where the second operation is used to select the upgrade area on the electronic map; or detect a second operation, where the second operation is used to enter location information of the upgrade area.

In a possible implementation, the display unit 1701 is further configured to display feedback information, where the feedback information indicates that the target vehicle cannot be upgraded or the target vehicle does not meet an upgrade requirement.

FIG. 18 is a schematic block diagram of an upgrade apparatus 1800 according to an embodiment of this application. The apparatus 1800 includes: a transceiver unit 1801, configured to receive an upgrade instruction; and a processing unit 1802, configured to: when a target vehicle is in an upgrade state, perform an upgrade operation according to the upgrade instruction; or when the target vehicle is not in an upgrade state, send feedback information, where the feedback information indicates that the target vehicle cannot be upgraded or the target vehicle does not meet an upgrade requirement. The upgrade state includes that the target vehicle is in a guarded state.

In a possible implementation, the upgrade state further includes at least one of the following: A charging plug of the target vehicle is in a disconnected state, an on-board diagnostics OBD system of the target vehicle is in a disconnected state, the target vehicle is in P-gear, a filler cap of the target vehicle is in a closed state, a caliper of a hand brake of the target vehicle is in a clamped state, a battery level of the target vehicle is in a flashable state, or the target vehicle is in a non-ignition state.

In a possible implementation, the transceiver unit is configured to receive, by the target vehicle in an upgrade area, the upgrade instruction.

In a possible implementation, the upgrade instruction includes preset time information for software upgrade, and the preset time information indicates a preset time for software upgrade.

In a possible implementation, the processing unit 1802 is further configured to: compare a target time with the preset time; and perform software upgrade when the preset time is greater than the target time.

In a possible implementation, the upgrade instruction further includes preset battery level information required for upgrade, and the preset battery level information indicates a first battery level.

In a possible implementation, the processing unit 1802 is further configured to: obtain target battery level information of the target vehicle, where the target battery level information indicates a second battery level; and perform software upgrade when a sum of the first battery level and the second battery level is greater than or equal to a remaining battery level of the target vehicle.

An embodiment of this application further provides a vehicle. The vehicle may include the electronic device 1700 or the apparatus 1800.

An embodiment of this application further provides a computer program product including instructions. When the computer program product is run on the foregoing apparatus, the vehicle control method in any one of the foregoing embodiments is performed.

An embodiment of this application provides a computer-readable storage medium. The computer-readable storage medium stores a computer program. When the computer program is run, the vehicle control method in any one of the foregoing embodiments is implemented.

The foregoing embodiments may be combined with each other to achieve different technical effects.

It should be understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application.

The foregoing description about the implementations allows a person skilled in the art to clearly understand that, for the purpose of convenient and brief description, division into the foregoing functional modules is used as merely an example for description. During actual application, the foregoing functions can be allocated to different functional modules for implementation as required. In other words, an inner structure of an apparatus is divided into different functional modules to implement all or a part of the functions described above.

In the several embodiments provided in this application, it should be understood that the disclosed apparatuses and methods may be implemented in other manners. For example, the described apparatus embodiment is merely an example. For example, division into the modules or the units is merely logical function division and may be other division in actual implementation. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may be one or more physical units, may be located in one place, or may be distributed in different places. A part or all of the units may be selected based on actual requirements to achieve the objectives of the solutions of embodiments.

In addition, functional units in embodiments of this application may be integrated into one processing module, each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a readable storage medium. Based on such an understanding, the technical solutions in embodiments of this application essentially, or the part contributing to the conventional technology, or all or a part of the technical solutions may be implemented in a form of a software product. The software product is stored in a storage medium and includes several instructions for instructing a device (which may be a single-chip microcomputer, a chip, or the like) or a processor (processor) to perform all or a part of the steps of the methods described in embodiments of this application. The foregoing storage medium includes any medium that can store program code, like a USB flash drive, a removable hard disk, a ROM, a RAM, a magnetic disk, or an optical disc. The foregoing descriptions are merely specific implementations of embodiments of this application, but are not intended to limit the protection scope of embodiments of this application. Any variation or replacement within the technical scope disclosed in this application shall fall within the protection scope of embodiments of this application. Therefore, the protection scope of embodiments of this application shall be subject to the protection scope of the claims.

## Claims

1. An application display method, comprising:
displaying a first interface of a first application; and
detecting a first operation in the first interface, wherein the first operation is used to display a second interface of the first application, the second interface comprises a first sub-interface and a second sub-interface, the first sub-interface is used to display a running status of a target vehicle on an electronic map, and the second sub-interface is used to provide an upgrade function.

2. The method according to claim 1, wherein the running status of the target vehicle on the electronic map comprises location information of the target vehicle.

3. The method according to claim 1 or 2, wherein the first sub-interface is further used to display or prompt an upgrade area, and the upgrade area is used to define an area in which the upgrade function can be performed.

4. The method according to claim 3, wherein the upgrade area is predefined or preconfigured.

5. The method according to claim 3 or 4, wherein the method further comprises:
detecting a second operation, wherein the second operation is used to select the upgrade area on the electronic map; or
detecting a second operation, wherein the second operation is used to enter location information of the upgrade area.

6. The method according to any one of claims 1 to 5, wherein the method further comprises:
displaying feedback information, wherein the feedback information indicates that the target vehicle cannot be upgraded or the target vehicle does not meet an upgrade requirement.

7. An electronic device, comprising a display, a memory, one or more processors, a first application, and one or more programs, wherein the one or more programs are stored in the memory, and when the one or more processors execute the one or more programs, the electronic device is enabled to perform the following method:
displaying a first interface of the first application; and
detecting a first operation in the first interface, wherein the first operation is used to display a second interface of the first application, the second interface comprises a first sub-interface and a second sub-interface, the first sub-interface is used to display a running status of a target vehicle on an electronic map, and the second sub-interface is used to provide an upgrade function.

8. The electronic device according to claim 7, wherein the running status of the target vehicle on the electronic map comprises location information of the target vehicle.

9. The electronic device according to claim 7 or 8, wherein the first sub-interface is further used to display or prompt an upgrade area, and the upgrade area is used to define an area in which the upgrade function can be performed.

10. The electronic device according to claim 9, wherein the upgrade area is predefined or preconfigured.

11. The electronic device according to claim 9 or 10, wherein the electronic device further performs:
detecting a second operation, wherein the second operation is used to select the upgrade area on the electronic map; or
detecting a second operation, wherein the second operation is used to enter location information of the upgrade area.

12. The electronic device according to any one of claims 7 to 11, wherein the electronic device further performs:
displaying feedback information, wherein the feedback information indicates that the target vehicle cannot be upgraded or the target vehicle does not meet an upgrade requirement.

13. An upgrade method, comprising:
receiving an upgrade instruction; and
when a target vehicle is in an upgrade state, performing an upgrade operation according to the upgrade instruction; or
when the target vehicle is not in an upgrade state, sending feedback information, wherein the feedback information indicates that the target vehicle cannot be upgraded or the target vehicle does not meet an upgrade requirement, wherein
the upgrade state comprises that the target vehicle is in a guarded state.

14. The method according to claim 13, wherein the upgrade state further comprises at least one of the following:
a charging plug of the target vehicle is in a disconnected state, an on-board diagnostics OBD system of the target vehicle is in a disconnected state, the target vehicle is in P-gear, a filler cap of the target vehicle is in a closed state, a caliper of a hand brake of the target vehicle is in a clamped state, a battery level of the target vehicle is in a flashable state, or the target vehicle is in a non-ignition state.

15. The method according to claim 13 or 14, wherein the receiving an upgrade instruction comprises: receiving, by the target vehicle in an upgrade area, the upgrade instruction.

16. The method according to any one of claims 13 to 15, wherein the upgrade instruction comprises preset time information for software upgrade, and the preset time information indicates a preset time for software upgrade.

17. The method according to claim 16, wherein the method further comprises: comparing a target time with the preset time; and performing software upgrade when the preset time is greater than the target time.

18. The method according to any one of claims 13 to 17, wherein the upgrade instruction comprises preset battery level information required for software upgrade, and the preset battery level information indicates a first battery level.

19. The method according to claim 18, wherein the method further comprises: obtaining target battery level information of the target vehicle, wherein the target battery level information indicates a second battery level; and performing software upgrade when a sum of the first battery level and the second battery level is greater than or equal to a remaining battery level of the target vehicle.

20. An upgrade apparatus, comprising:
a transceiver unit, configured to receive an upgrade instruction; and
a processing unit, configured to: when a target vehicle is in an upgrade state, perform an upgrade operation according to the upgrade instruction; or when the target vehicle is not in an upgrade state, send feedback information, wherein the feedback information indicates that the target vehicle cannot be upgraded or the target vehicle does not meet an upgrade requirement, wherein
the upgrade state comprises that the target vehicle is in a guarded state.

21. The apparatus according to claim 20, wherein the upgrade state further comprises at least one of the following:
a charging plug of the target vehicle is in a disconnected state, an on-board diagnostics OBD system of the target vehicle is in a disconnected state, the target vehicle is in P-gear, a filler cap of the target vehicle is in a closed state, a caliper of a hand brake of the target vehicle is in a clamped state, a battery level of the target vehicle is in a flashable state, or the target vehicle is in a non-ignition state.

22. The apparatus according to claim 20 or 21, wherein the transceiver unit is further configured to receive, by the target vehicle in an upgrade area, the upgrade instruction.

23. The apparatus according to any one of claims 20 to 22, wherein the upgrade instruction comprises preset time information for software upgrade, and the preset time information indicates a preset time for software upgrade.

24. The apparatus according to claim 23, wherein the processing unit is further configured to: compare a target time with the preset time; and perform software upgrade when the preset time is greater than the target time.

25. The apparatus according to any one of claims 20 to 24, wherein the upgrade instruction comprises preset battery level information required for software upgrade, and the preset battery level information indicates a first battery level.

26. The apparatus according to claim 25, wherein the processing unit is further configured to: obtain target battery level information of the target vehicle, wherein the target battery level information indicates a second battery level; and perform software upgrade when a sum of the first battery level and the second battery level is greater than or equal to a remaining battery level of the target vehicle.

27. An electronic device, comprising the apparatus according to any one of claims 13 to 19.

28. A computer-readable storage medium, wherein the computer-readable medium stores program code, and when the program code is run on a computer, the computer is enabled to perform the method according to any one of claims 1 to 6; or
when the program code is run on a computer, the computer is enabled to perform the method according to any one of claims 13 to 19.
